# EUROPÄISCHE PATENTSCHRIFT

(11) **EP 1 478 498 B1**
(45) Veröffentlichungstag und Bekanntmachung des Hinweises auf die Patenterteilung: **24.02.2010**
(21) Anmeldenummer: 03742941.2
(22) Anmeldetag: 15.02.2003
(51) Int. Cl.: B29B 11/16, B29C 35/00, B29C 33/02, D04H 13/00

(54) **VERFAHREN ZUM HERSTELLEN VON FASERVLIES-FORMTEILEN**
METHOD AND DEVICE FOR PRODUCING NONWOVEN MOULDED BODIES
PROCEDE ET DISPOSITIF POUR PRODUIRE DES PIECES MOULEES EN NON-TISSE

(30) Priorität: 27.02.2002 DE 10208524
(43) Veröffentlichungstag der Anmeldung: 24.11.2004
(73) Patentinhaber: Johann Borgers GmbH & Co. KG, 46393 Bocholt (DE)
(72) Erfinder: ERNST, Michael, 46399 Bocholt (DE); SIEBEN, Holger, 46395 Bocholt (DE); MENKE, Klaus, 46397 Bocholt (DE)
(74) Vertreter: Mentzel, Norbert
(86) Internationale Anmeldenummer: PCT/EP2003/001542
(87) Internationale Veröffentlichungsnummer: WO 2003/072330

(56) Entgegenhaltungen:
- EP-A- 0 236 516
- EP-A- 0 500 202
- DE-A- 4 334 342
- US-A- 2 459 804
- US-A- 4 418 031

## Beschreibung

Die Erfindung richtet sich zunächst auf ein Verfahren zum Herstellen von Formteilen aus einem durch Bindemittel verfestigbaren Faservlies, welches grundsätzlich in der im Oberbegriff von Anspruch 1 genannten Weise abläuft. Der Aufbau und die Verfestigung dieser Faservliese ist in der DIN 61210 beschrieben. Solche Faservliese bestehen einerseits aus Fasergut und andererseits aus Bindemitteln für die Fasern.

Die Fasern können organischer Natur sein, nativ-synthetisch sein, aber auch eine anorganische Grundlage haben. Beispielsweise zu nennen sind Reißbaumwolle, Flachs, Jute, Polyester-Fasern, Acryl-Fasern, Steinwolle oder Glasfaser.

Die Bindemittel sind im allgemeinen synthetischer Natur. Es kommen Thermoplaste, Duroplaste, wie Polypropylen, Polyester bzw. Phenolharz sowie Epoxidharze in Frage. Die Applikation dieser Mittel kann in Pulverform aus Lösungen oder Dispersion erfolgen. Besonders vorteilhaft ist es, die Bindemittel in Faserform zu verwenden, die nachfolgend kurz "Bindefasern" bezeichnet werden sollen.

Die Faservliese werden mechanisch durch Kardieren mit Florschichtung oder auf aerodynamischem Weg hergestellt. Das Endprodukt, nämlich die verfestigten Formteile werden durch Pressformung in einer aus Patrize und Matrize bestehenden Presse erzeugt. Wenn Thermoplast-Bindemittel verwendet werden, ist die Abfolge der Behandlung heiß-kalt, dagegen wird bei Verwendung von duroplastischen Materialien als Bindemittel der Verfahrensablauf kalt-heiß benutzt. Zur besseren Handhabung des Faservlieses beim Einlegen in die Formwerkzeuge empfiehlt es sich das Faservlies mechanisch und/oder thermisch vorzuverfestigen. Das kann zum Beispiel durch Erwärmung bis zur Erweichung der Bindemittel im Faservlies erfolgen. Die Bindemittel im Faservlies erzeugen dann eine geringe Verbindung der Fasern untereinander. Eine besonders kostengünstige Herstellung besteht darin, die Vliesbildung und die Pressformung in einem Arbeitsgang zusammenzufassen. In diesem Fall werden die mit Bindemitteln versetzten Faservliese unmittelbar in Formwerkzeuge gebracht und dort zu Formteilen verpresst.

In Abhängigkeit von der Zusammensetzung und Fertigung der Faservliese werden geschlossene oder offene Formteile verwendet. Dies hängt davon ab, ob die zu erzeugenden Formteile beim Pressen abgekühlt oder aufgeheizt werden müssen. Der Übergang zwischen der Wärme zur Behandlung des Faservlieses kann durch die Masse der Formwerkzeuge oder durch das Fluid Luft oder durch Wasser-Heißdampf erfolgen.

Die Dichte der Formteile rangiert im Bereich von 100 bis 1000 kg pro Kubikmeter. Die Dichte ist nicht immer einheitlich und kann innerhalb eines Formteils variieren. Ein wesentlicher Einsatz solcher Formteile erfolgt im Automobilbau, und zwar als Ausstattungselement auf der Innenseite oder Außenseite der Karosserie. Sie dienen zur Schalldämmung oder Schalldämpfung. Fallweise können sie als Tragteile fungieren. Als Beispiele sind zu nennen, die Bodendämpfung im Fahrzeug unter dem Teppich, die Stirnwandisolation oder Motorhaubenisolation, die Seitenverkleidung im Fahrzeug oder die Hutablage.

Solche Formteile haben sich seit Jahrzehnten bewährt, doch haftet ihnen der wesentliche Nachteil an, dass ihre Konturtreue während der Pressformung unzureichend ist. Es gibt kritische Formbereiche in den Formwerkzeugen, wo die Innenkontur des Formhohlraums eine starke Krümmung aufweist, oder wo ihre Profilhöhe stark anwächst. Bei den bekannten Verfahren ist eine exakte Formadaption an die gewünschte Innenkontur der Form nicht möglich.

Man hat bisher ohne Erfolg versucht den Nachteil fehlender Konturtreue zu beheben. Ein Versuch bestand darin, die Dicke der Faservliese zu erhöhen. Ein anderer Versuch bestand darin, in den kritischen Bereichen zusätzliche Lagen von Faservliesen zu verwenden. Die gewünschte Konturtreue konnte dadurch aber nicht erreicht werden und brachte wesentliche andere Nachteile. Einer dieser Nachteile ist der höhere Kostenaufwand zur Herstellung solcher Formteile und die damit verbundene unerwünschte Gewichtszunahme des Formteils. Dies ist für den Einsatz dieser Formteile im Automobilbereich nicht akzeptabel.

Aus der japanischen Druckschrift JP 04332591 ist ein Verfahren bekannt, bei dem ein luftdurchlässiges Kissen mit einem Oberflächenmaterial überzogen wird. Dies geschieht in einer aus zwei Werkzeugen bestehenden Vorrichtung, bei der das untere Werkzeug Luftkanäle aufweist, an denen ein Vakuum angelegt wird, während das obere Werkzeug Luftkanäle aufweist, durch die Heißluft auf das Formteil gegeben wird. Bei diesem Verfahren ist das Formteil jedoch schon vorgeformt, so dass es bereits die gewünschte Geometrie aufweist.

Die japanische Druckschrift JP 06322651 beschreibt ein Verfahren zum Formen von Vliesformteilen. Hierbei wird das Rohmaterial mit einer luftundurchlässigen Schicht belegt und dies dann in einem Werkzeug, welches Vakuumkanäle aufweist, in die gewünschte Form gebracht. Hierbei sind die Vakuumkanäle an den kritischen Bereichen angeordnet. Der Nachteil dieses Tiefziehverfahrens ist, dass nur Formteile mit annähernd gleicher Wandstärke produziert werden können.

Die Druckschrift US 2,459,804 zeigt eine Vorrichtung zur Herstellung von Filzhüten und ähnlichen Objekten. Bei der ersten Vorrichtung wird auf einer mit Vakuumkanälen durchzogenen Patrize das Rohmaterial gleichmäßig abgelegt. Hierzu liegt an den Vakuumkanälen ein Vakuum an. In einem zweiten Schritt wird diese Patrize mit dem Rohmaterial mit einer dazugehörigen Matrize zusammengebracht. Unter Wärmeeinwirkung wird das sich zwischen beiden Formwerkzeugen befindende Material in die gewünschte Form gepresst. Bei diesem Vorgang liegt an den Vakuumkanälen der Patrize jedoch kein Vakuum an. Eine andere Ausführungsform zeigt ebenfalls ein aus Patrize und Matrize bestehendes Formwerkzeug, wobei zwischen diesen beiden Teilen das Filzmaterial angeordnet ist. Beide Werkzeuge verfügen über Luftkanäle. Die Patrize wird mit Heißdampf gefüllt, der durch die Luftkanäle, durch das Formteil und dann durch die Luftkanäle in die Matrize eindringt. Dieser Heißdampf dient dem Formen des Formteiles. Aus der Matrize wird der Dampf abgesaugt. Diese Vorrichtung hat den Nachteil, dass das Rohmaterial schon in etwa der späteren Form des Formteiles angepasst sein muss. In den kritischen Formbereichen wird diese Vorrichtung ebenfalls keine genaue Formadaption liefern können.

Die Druckschrift EP 0 225 629 zeigt, insbesondere in den Fig. 4 und 5, eine Pressung des Werkstückes in eine gewünschte Form durch zwei Formteile, wobei ein Formteil mit regelmäßigen Bohrungen durchsetzt ist, durch die das Gas, welches beim Pressen des Werkstoffes freigesetzt wird, abgeleitet wird. Jedoch ist in diesem Patent nicht zu erkennen, dass diese Gasableitung durch die Bohrungen unterstützende Wirkung auf den Pressvorgang hat. Somit entstehen auch bei diesem Patent ungleichmäßige Formen, besonders an den kritischen Biegungen. Das wird auch dadurch deutlich, dass die Bohrungen nicht an speziellen Punkten der Formteile angreifen, sondern gleichmäßig und linear über ein Formteil verteilt sind. Eine unterstützende Wirkung durch die Absaugung des Gases durch die Bohrungen ist in diesem Patent nicht vorgesehen.

Die japanische Druckschrift JP 62 135 316 beschreibt die Möglichkeit der Verdichtung des Werkstoffes durch Gasabsaugung. Hierbei ist jedoch keine Formung des Werkstückes vorgesehen und ebenso wenig eine Pressung des Werkstückes. Letztere ist bildlich in den Fig. 1 und 2 gezeigt, welche jedoch die gleiche Pressung und somit auch die gleichen Nachteile wie die EP 0 225 629 zeigen.

Die japanische Druckschrift JP 62 135 307 zeigt ein Pressverfahren für einen Werkstoff bei dem gewisse Werkstoffzusätze beim Pressverfahren hinzugefügt werden und somit das Verfahren begünstigen sollen. Auch hier ist keinerlei Hinweis gegeben, dass dieses Verfahren eine spezielle Konturtreue aufweist oder diese begünstigt. Die Bohrungen, die diese Pressung aufweist, sind ebenfalls, wie bei den vorangegangenen Patenten, nur zur Absaugung von dem beim Pressvorgang entstehenden Gas gedacht und unterstützen in keiner Weise den Pressvorgang. Somit entgeht auch diesem Patent die Konturtreue bei dem Pressvorgang.

Die japanische Druckschrift JP 62 135 305 zeigt eine Vorrichtung, die ähnlich zur JP 62 135 316 ist, wobei bei dieser Druckschrift die Gasabsaugung auch nach dem Pressvorgang aufrechterhalten bleibt und nach dem Öffnen der Presse sich die Gasflussrichtung umkehrt, um ein leichteres Abtrennen des geformten Werkstoffes vom Formteil zu ermöglichen. Auch diese Erfindung dient nicht dazu, eine konturgetreue Pressung, speziell auch in den kritischen Biegungen, zu erhalten, da nicht zu erkennen ist, dass die Gasabsaugung den Pressvorgang unterstützt.

Die japanische Druckschrift JP 62 090 203 zeigt ebenfalls eine Druckvorrichtung, wie sie in den übrigen Druckschriften gezeigt wird. Hierbei ist ein Vakuumdruck beschrieben, der bei der Vorformung des Werkstoffes eine gleichmäßige Dichte im Werkstoff erzeugen soll, welcher danach mit dem gleichen Pressprinzip, wie in den übrigen Druckschriften, gepresst wird. Bei der Pressung selber haben jedoch die Bohrungen nur die Wirkung, dass das Gas nach außen abgeleitet werden kann, welches beim Pressen entsteht. Somit sind auch bei dieser Patentschrift die kritischen Bereiche in den Biegungen nicht konturgetreu.

Bei der japanischen Druckschrift JP 62 135 313 ist eine ähnliche Pressung beschrieben wie bei der JP 62 135 307, wobei an der Pressung selber keine Veränderungen vorgenommen wurden. Lediglich bei der Zuführung des Materials in die Presse. Somit hat auch diese japanische Patentschrift alle Nachteile der übrigen japanischen Druckschriften, nämlich eine nicht konturgetreue Form des Werkstückes nach der Pressung.

Alle vorgenannten Verfahren führen nicht zu einem konturgetreuen Werkstück. An kritischen Stellen, wie Biegungen, kommt es durch Stauchungen beim Pressvorgang zu unterschiedlichen Dicken im Material. Alle vorgenannten Verfahren verursachen diese Ungenauigkeit. Sie können keine konturgetreuen Werkstücke erzeugen

Diese Nachteile werden durch die in den Ansprüchen 1 und 2 genannten Verfahren beseitigt. Bei diesen Verfahren wird in der im Oberbegriff genannten Verfahrensstufe, wo das Werkzeug geschlossen ist, ein Sog punktuell bereichsweise mindestens in den genannten kritischen Profilbereichen auf das im Formwerkzeug befindlich Vorprodukt oder Faservlies ausgeübt. Dadurch wir die im Inneren eingeschlossene Luft abgesaugt. Bei diesem Absaugen kann ein Luftstrom das mit Bindemitteln versetzte Faservlies vom Forminneren aus an die Kontur des Formwerkzeugs heranbewegen. Diese Heranbewegen des Faservlieses an die Kontur des Formwerkzeuges bedeutet, dass das Material gegen die Kontur drückt. Es ist somit von einem Saugdruck die Rede. Bis zum Erkalten bzw. Aushärten des integrierten Bindemittels bleiben die angedrückten Fasern in ihrer konturgetreuen Position. Wird das fertige Formteil dem Formwerkzeug entnommen, so weist es auch an den kritischen Bereichen das gewünschte exakt adaptierte Profil auf.

Eine Möglichkeit zur Erstellung der Formteile in einer sogenannten "Thermoplast-Technik" ist im Verfahrensanspruch 3 angegeben. Eine zweite Möglichkeit, welche die sogenannte "Duroplast-Technik" kennzeichnet, ist im Verfahrensanspruch 9 genannt.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: einen schematischen Querschnitt durch ein aus dem Faservlies erstelltes Vorprodukt, bestehend aus einem mit Bindemitteln versehenen Faservlies, welches vorverfestigt ist,
- Fig. 2: verdeutlicht eine erste Verfahrensstufe, wo das Vorprodukt einer Erwärmung bis zum Erweichen der Bindemittel ausgesetzt wird,
- Fig. 3: zeigt die nächste Verfahrensstufe, wo das gemäß Fig. 2 erwärmte Vorprodukt in ein zweiteiliges Formwerkzeug gebracht wird, und dort in besonderer, noch näher zu beschreibender Weise behandelt wird,
- Fig. 4: eine diese besondere Behandlung veranschaulichende Verfahrensstufe, die bei geschlossenem Formwerkzeug abläuft und
- Fig. 5: das nach dem erfindungsgemäßen Verfahren resultierende Faser-Formteil.

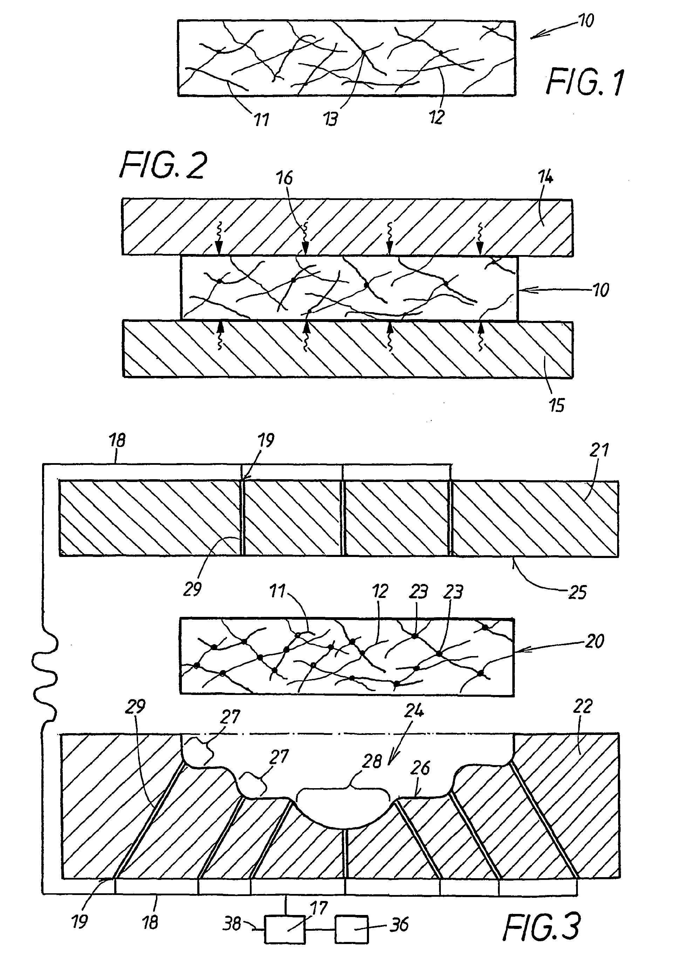

In Fig. 1 ist schematisch der Querschnitt eines Vorprodukts 10 gezeigt, an welchem das erfindungsgemäße Verfahren in den nachfolgenden Figuren näher erläutert wird. Dieses Vorprodukt 10 ist ein auf aerodynamischem Wege hergestelltes Faservlies. Das Faservlies ist eine homogene Mischung von z.B. vier Komponenten. Eine erste Komponente, die in Fig. 1 mit 11 gekennzeichnet ist, ist eine sogenannte Bi-Komponentenfaser, die um einen zentralen Faserkern einen aus thermoplastischem Material bestehenden Mantel aufweist. Diese Komponente ist das "Bindemittel" im Faservlies, nämlich in Form der eingangs bereits erwähnten "Bindefasern". Weitere, in Fig. 1 in Faserform gezeichnete, mit 12 bezeichnete Komponenten können verschiedener Art sein. Statt aus Fasern können ein Teil der Mischungskomponenten auch aus Schaumflocken bestehen. Bewährt hat sich eine Mischung aus Reißbaumwolle, Polypropylen-Fasern und gegebenenfalls Polyurethan-Schaumflocken. Das Mischungsverhältnis dieser Bindemittel 11 und der vorgenannten drei weiteren Komponenten kann, in der vorgenannten Reihenfolge, bei 15:45:15:25 Gew.% liegen.

Zur besseren Handhabung des Faservlieses sollten die Faserelemente 11, 12 bereits etwas aneinander haften. Dies geschieht am besten durch eine geringe Erwärmung des Faservlieses, wodurch Haftpunkte 13 zwischen den Fasern 11, 12 entstehen. Es entsteht dann das Vorprodukt 10. Statt auf thermischem Wege könnte eine solche Vorverfestigung des Faservlieses auch auf mechanischem Wege erzeugt werden.

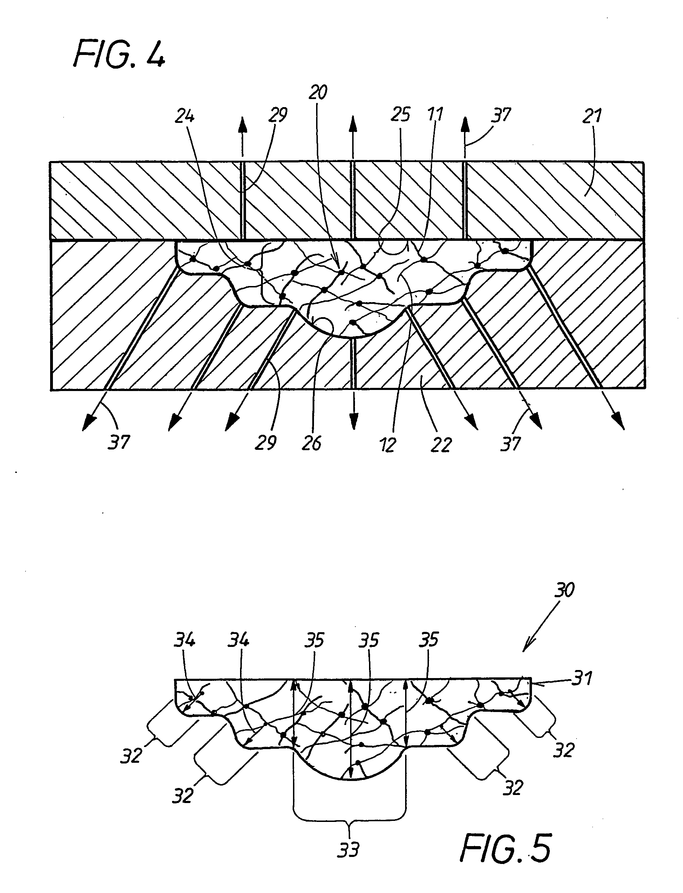

Dieses Vorprodukt 10 wird, wie Fig. 2 zeigt, zwischen zwei Heizplatten 14, 15 gebracht, wo die Bindefasern 11 im gewünschten Umfang erweichen. Das Eindringen der Heizwärme ist in Fig. 2 durch Wellenlinien-Pfeile 16 veranschaulicht. Bei dem vorerwähnten Aufbau des Vorprodukts 10 üben die Heizplatten 14, 15 eine Temperatur von z.B. 200° C eine Minute lang aus. Bei dieser Behandlung in Fig. 2 werden die Bindemittel in dem erwünschten Umfang wirksam und führen zu einem aus Fig. 3 ersichtlichen Zwischenzustand 20 des Vorprodukts. In diesem Zwischenzustand sind die Bindemittel 11 voll aktiv geworden und haben zu einer intensiven Verklebung 23 der Fasern 11, 12 geführt. Das in diesem Zwischenzustand 20 gebrachte Faservlies wird unverzüglich der Formpressung zugeführt. Diese Formpressung erfolgt in einem zweiteiligen Formwerkzeug in Fig. 4, welches den aus Fig. 3 ersichtlichen besonderen Aufbau hat.

Das Formwerkzeug besteht aus einer Patrize 21 und einer Matrize 22 die, im geschlossenen Zustand gemäß Fig. 4, einen Hohlraum 24 zwischen sich schließen, welcher das Negativ des gewünschten Profils vom fertigen Formteil 30 ist. Das Aussehen dieses Formteils ergibt sich beispielsweise aus Fig. 5. Wie bereits vorausgehend beschrieben wurde, kann ein solches Endprodukt 30 kritische, in Fig. 5 mit 32 bzw. 33 bezeichnete Profilbereiche aufweisen. Die Profilbereiche 32 umfassen Stellen, wo das Umrissprofil 31 vom Formteil 30 eine starke Krümmung aufweist, was in Fig. 5 symbolisch durch einen Krümmungsradius 34 veranschaulicht ist. Weitere kritische Profilbereiche 33 entstehen dann, wenn die mit 35 gekennzeichnete Profilhöhe im Formteil 30 stark anwächst. Die Problematik lässt sich am besten an dem in Fig. 3 angedeuteten Negativ-Profil der beiden Formwerkzeug-Teile 21, 22 veranschaulichen.

Im vorliegenden Fall weist das eine Formwerkzeug 21 eine relativ einfache, z.B. ebene Innenkontur 25 auf, aber das andere Formwerkzeug 22 besitzt ein kompliziertes Relief mit einer zerklüfteten Innenkontur 26. Wird, wie Fig. 3 verdeutlicht, das im Zwischenzustand 20 befindliche Vorprodukt in den Hohlraum 24 gebracht und dann bei geschlossenem Formwerkzeug 21, 22 abgekühlt, so ist im Stand der Technik nicht zu erwarten, dass das Faservlies in die mit 27 bzw. 28 bezeichneten Konturbereichen des Formwerkzeugs hineingelangt. Statt eines konturgetreuen Verlaufs bei 26 in Fig. 3 werden die kritischen Konturbereiche 27, 28 nicht von dem Zwischenprodukt 20 ausgefüllt. Erkaltet nun das Zwischenprodukt 20 zwischen den kühlen Werkzeugen 21, 22, so ergibt sich im fertigen Formteil Profilabweichungen an den vorerwähnten kritischen Profilstellen 32, 33. Das Formteil 30 hat nicht die gewünschte Qualität.

Dies erreicht aber das erfindungsgemäße Verfahren mittels der in Fig. 3 gezeigten besonderen Presse. Wie Fig. 3 schematisch verdeutlicht, ist den Formwerkzeugen 21, 22 eine Saugeinrichtung 17 zugeordnet, von welche eine Schar von Saugleitungen 18 ausgeht. Die Saugleitungen 18 sind an definierte Stellen 19 der beiden Formwerkzeuge 21, 22 angeschlossen, von wo mindestens ein Saugkanal 29 ausgeht. Diese Saugkanäle 29 münden in jedem Fall an den kritischen Konturbereichen 27, 28 der Innenkontur 26 aus, sind zweckmäßigerweise aber auch bis zur Innenkontur 25 des gegenüberliegenden Formwerkzeugs 21 geführt. Die Saugkanäle 29 durchsetzen die Wand der Formwerkzeuge 21, 22. Es genügt die Saugkanäle 29 nur punktuell an diesen Konturbereichen 27, 28 vorzusehen. Ein Durchmesser von ca. 1 Millimeter in den Saugkanälen 29 genügt.

Der Saugeinrichtung 17 kann, wie Fig. 3 weiterzeigt, ein Steuergerät 36 zugeordnet sein, welches den Zeitpunkt und die Zeitdauer der Saugwirksamkeit der Einrichtung 17 vorbestimmt und in Abhängigkeit vom Ablauf der Formteil-Entstehung im Hohlraum 24 bestimmt. Die sich dabei ergebenden Wirkungen lassen sich aus Fig. 4 erkennen. Die Saugeinrichtung 17 hat einen Luftauslass 38.

Wie bereits erwähnt wurde, wird das Vorprodukt im heißen Zwischenzustand 20 in den Hohlraum 24 zwischen den beiden Formwerkzeugen 21, 22 gebracht, worauf die Werkzeuge geschlossen werden. Dann ist der Hohlraum weitgehend mediendicht abgeschlossen. Die beschriebene Saugeinrichtung 17 wird unmittelbar nach dem Schließen der Formwerkzeuge 21, 22 wirksam gesetzt. Sie übt einen Sog auf das eingeschlossene, noch in den heißen Zwischenzustand 20 befindliche Faservlies aus, was in Fig. 4 durch Saug-Pfeile 37 an jedem der Kanäle 29 verdeutlicht ist. Bei diesem Absaugen 37 entsteht ein Sugdruck im Inneren des heißen Faservlieses Zwischenprodukt 20, wodurch die Faserscharen 11, 12 mitgenommen und gegen die Konturen 25, 26 heranbewegt werden. Dies geschieht vor allem an den in Fig. 3 erläuterten kritischen Konturbereichen 27, 28. Die Folge dieser Faserbewegung im Forminneren 24 ist letztlich eine konturgetreue Lage der Fasern 11, 12 in beiden Werkzeugen 21, 22. Bei Ausübung des Sogs 37 in Fig. 4 wird die im Inneren des Faservlieses befindliche heiße Luft abgeführt. Diese Abführung der Heißluft führt zu einer schnelleren intensiven Abkühlung des Zwischenprodukts, was zu einer baldigen schnellen Verfestigung des Faservlieses führt.

Das Ergebnis dieses Verfahrens ergibt sich aus dem in Fig. 5 erkennbaren Querschnitt des Endprodukts 30. Wegen der Saugbehandlung bei 37 von Fig. 4 entsteht auch an den kritischen Profilbereichen 32, 33 ein konturgetreuer Verlauf im Umrissprofil 31. Man erhält einen Formteil 30 höchster Qualität.

Bei manchen Anwendungen genügt es, die Saugwirkungen 37 nur im Bereich des einen Formwerkzeugs 22 auszuführen, nämlich dort, wo die kritischen Profilbereiche 32, 33 sich befinden. Wie aber aus Fig. 3 ersichtlich, sind im vorliegenden Fall in beiden Formwerkzeugen 21, 22 die Saugkanäle 29 vorgesehen.

Das Faservlies braucht nicht als Vorprodukt 10 mit einer Vorverfestigungen 13 ausgeführt zu werden, sondern könnte gleich der Wärmebehandlung zwischen den Heizplatten 14, 15 oder, alternativ, in beheizten Formwerkzeugen 21, 22 unterzogen werden. Anstelle des oben erwähnten Faservlieses könnte eine dreilagige Ausbildung eines alternativen Faservlieses erfolgen und beispielsweise aus einer Bikomponenten-Faser aus Reißbaumwolle und aus Polypropylen im Verhältnis von 20:60:20% bestehen. Die Faservliese können dabei ein Gewicht von 200 bis 600g pro Quadratmeter aufweisen.

Die Faservliese können beidseitig oder einseitig mit verformbaren Dekorlagen oder Kunststofflagen abgedeckt sein, die bei der Sogbehandlung ebenfalls konturgetreu mitgenommen werden. Diese Decklagen sollten nach Möglichkeit durchlässig für die Saugluft sein.

Die erwähnte Saugbehandlung 37 bei der Erfindung erfolgt gleich zu Beginn des Schlusses der beiden Formwerkzeuge 21, 22. Es genügt hier ein kurzer Saugimpuls. Anstelle eines Impulses könnte man auch mehrere Saugimpulse aufeinanderfolgen lassen, deren Zeitdauer und Sog-Maximum dem individuellen Aufbau des Faservlieses angepasst sind.

## Patentansprüche

1. Verfahren zum Herstellen von Formteilen (30) aus einem durch Bindemittel (11) und durch Pressung verfestigbaren Faservlies (10, 20),
bei welchem zunächst das mit vorzugsweise Thermoplast-Bindemitteln (11) versehene Faservlies hergestellt wird und thermisch und/oder mechanisch zu einem Vorprodukt (10) vorverfestigt wird, um sich danach gut handhaben zu lassen,
dann das Vorprodukt (10) einer Erwärmung (16) bis zur Plastifizierung der Bindemittel (11) ausgesetzt, in ein Pressformwerkzeug (21, 22), welches aus wenigstens zwei Werkzeugteilen besteht, die bei geschlossener Presse einen Hohlraum bilden, welcher das Negativ des gewünschten Formteiles darstellt, eingelegt und dort verpresst wird,
worauf durch Erkalten und/oder Aushärten der intermediär plastischen Bindemittel (11) zwischen den Fasern (12) im Vorprodukt (10, 20) das verfestigte Formteil (30) mit dem gewünschten Profil (31) entsteht,
wobei das Formteil (30) kritische Profilbereiche (32, 33) mit starker Krümmung (34) seines Umrisses und/oder stark anwachsender Profilhöhe (35) besitzt,
**dadurch gekennzeichnet,**
**dass** in der Verfahrensstufe, wo das Formwerkzeug (21, 22) geschlossen ist, punktuell, mindestens in den kritischen Profilbereichen (32, 33) ein Sog (37) auf das im Formwerkzeug (21, 22) eingeschlossene Vorprodukt (10, 20) ausgeübt wird, wodurch die im Faservlies-Inneren eingeschlossene Luft absaugt (37) wird
und **dass** durch den beim Absaugen (37) entstehenden Luftstrom das mit den Bindemitteln (11) versetzte Faservlies vom Forminneren aus an die Kontur (26, 25) des Formwerkzeugs (22, 21) heranbewegt wird und bis zum Erkalten und/oder Aushärten der integrierten Bindemittel (11) in dieser konturgetreuen Position verbleibt.

2. Verfahren zum Herstellen von Formteilen (30) aus einem durch Bindemittel (11) und durch Pressung verfestigbaren Faservlies (10,20),
welches in ein Pressformwerkzeug (21,22), welches aus wenigstens zwei Werkzeugteilen besteht, die bei geschlossener Presse einen Hohlraum bilden, welcher das Negativ des gewünschten Formteiles darstellt, eingelegt und dort verpresst wird,
worauf durch Erkalten und/oder Aushärten von Bindemitteln (11) zwischen Fasern (12) im Vorprodukt (10,20) das verfestigte Formteil (30) mit dem gewünschten Profil (31) entsteht,
wobei das Formteil (30) kritische Profilbereiche (32,33) mit starker Krümmung (34) seines Umrisses und/oder stark anwachsender Profilhöhe (35) besitzt,
**dadurch gekennzeichnet,**
**dass** das noch mit unbehandelten Bindemitteln (11) versetzte Faservlies zwischen Heizplatten (14,15) oder in das beheizbare Formwerkzeug eingebracht und dort unmittelbar seiner Erwärmung bis zur erforderlichen Betriebstemperatur um die Bindemittel zu plastifizieren ausgesetzt wird,
**dass** in der Verfahrensstufe, wo das Formwerkzeug (21,22) geschlossen ist, punktuell, mindestens in den kritischen Profilbereichen (32,33) ein Sog (37) auf das im Formwerkzeug (21,22) eingeschlossene Faservlies ausgeübt wird, wodurch die im Faservlies-Inneren eingeschlossene Luft abgesaugt (37) wird
und **dass** durch den beim Absaugen (37) entstehenden Luftstrom mit den Bindemitteln (11) versetzte Faservlies vom Forminneren aus an die Kontur (26,25) des Formwerkzeugs (22,21) heranbewegt wird und bis zum Erkalten und/oder Aushärten der integrierten Bindemittel (11) in dieser konturgetreuen Position verbleibt.

3. Verfahren nach Anspruch 1, **dadurch gekennzeichnet, dass** zunächst die Erwärmung (16) des Vorprodukts (10) auf die erforderliche Betriebstemperatur außerhalb des Formwerkzeugs (21, 22) erfolgt
und dass dann das im heißen Zwischenzustand (20) befindliche Vorprodukt in das an sich kühle Formwerkzeug (21, 22) eingelegt und das Formwerkzeug (21, 22) geschlossen wird.

4. Verfahren nach Anspruch 1 oder 3, **dadurch gekennzeichnet, dass** die Erwärmung (16) des Vorproduktes (10) auf die erforderliche Betriebstemperatur (20) zwischen zwei Heizplatten (14, 15) ausgeführt wird.

5. Verfahren nach einem der Ansprüche 1 bis 4, **dadurch gekennzeichnet, dass** der Sog (37) gleich nach dem Schließen des Formwerkzeugs (21, 22) erfolgt.

6. Verfahren nach einem der Ansprüche 1 bis 5, **dadurch gekennzeichnet, dass** der Sog (37) als kurzer Impuls ausgeübt wird.

7. Verfahren nach einem der Ansprüche 1 bis 6, **dadurch gekennzeichnet, dass** der Sog (37) in Form mehrerer aufeinanderfolgender Impulse ausgeführt wird.

8. Verfahren nach Anspruch 7, **dadurch gekennzeichnet, dass** die Sog-Impulse sich hinsichtlich ihrer Dauer und/oder Sog-Maximum unterscheiden.

9. Verfahren nach Anspruch 1, **dadurch gekennzeichnet, dass** das Vorprodukt (10) in das heiße Formwerkzeug eingebracht wird,
dass die Erwärmung des Vorprodukts (10) auf die erforderliche Betriebstemperatur dann im Inneren des geschlossenen Formwerkzeugs erfolgt
und dass danach die Form geöffnet, das Formteil (30) entnommen und außerhalb des Formwerkzeugs abgekühlt wird.

## Claims

1. Process for producing mouldings (30) from a nonwoven fibre material (10, 20) that can be consolidated by the use of binders (11) and by compression,
wherein first of all the nonwoven fibre material which is preferably provided with thermoplastic binders (11) is produced and is thermally and/or mechanically pre-consolidated to form a semi-finished product (10), to enable it to be handled satisfactorily thereafter,
then the semi-finished product (10) is subjected to heating (16) until the binders (11) are plasticised, placed in a compression mould (21, 22) consisting of at least two mould sections which when the press is closed form a cavity that is the negative of the desired moulding, and is compressed therein,
after which, by cooling and/or hardening the intermediately plasticised binders (11) between the fibres (12) in the semi-finished product (10,20); the consolidated moulding (30) with the desired profile (31) is produced,
the moulding (30) having critical profile regions (32, 33) with a contour having a strong curvature (34) and/or sharply increasing profile height (35),
**characterised in that**
in the step of the process in which the mould (21, 22) is closed, suction (37) is applied at individual points, at least in the critical profile regions (32, 33), to the semi-finished product (10, 20) enclosed in the mould (21, 22), thereby sucking out (37) the air enclosed in the interior of the nonwoven fibre material,
and as a result of the air current formed during the suction process (37) the nonwoven fibre material combined with the binders (11) is moved from the inside of the mould outwards against the contour (26, 25) of the mould (22, 21) and remains in this position fitting closely to the contour until the integrated binders (11) have cooled and/or hardened.

2. Process for producing mouldings (30) from a nonwoven fibre material (10, 20) that can be consolidated by the use of binders (11) and by compression,
which is placed in a compression mould (21, 22) consisting of at least two mould sections which when the press is closed form a cavity that is the negative of the desired moulding, and is compressed therein,
after which, by cooling and/or hardening binders (11) between fibres (12) in the semi-finished product (10, 20), the consolidated moulding (30) with the desired profile (31) is produced,
the moulding (30) having critical profile regions (32, 33) the outline of which has a strong curvature (34) and/or with a sharply increasing profile height (35),
**characterised in that**
the nonwoven fibre material still containing untreated binders (11) is placed between hotplates (14, 15) or in the heatable mould and is there subjected to direct heating until the operating temperature required to plasticise the binders is reached,
**in that** in the step of the process in which the mould (21, 22) is closed, suction (37) is applied at individual points, at least in the critical profile regions (32, 33), to the nonwoven fibre material enclosed in the mould (21, 22), thereby sucking out (37) the air enclosed in the interior of the nonwoven fibre material,
and **in that** as a result of the air current formed during the suction process (37) the nonwoven fibre material combined with the binders (11) is moved from the inside of the mould outwards against the contour (26, 25) of the mould (22, 21) and remains in this position fitting closely to the contour until the integrated binders (11) have cooled and/or hardened.

3. Process according to claim 1, **characterised in that** first of all the heating (16) of the semi-finished product (10) to the required operating temperature is carried out outside the mould (21, 22)
and then the semi-finished product now in the hot intermediate state (20) is placed in the inherently cool mould (21, 22) and the mould (21, 22) is closed.

4. Process according to claim 1 or 3, **characterised in that** the heating (16) of the semi-finished product (10) to the required operating temperature (20) is carried out between two hotplates (14, 15).

5. Process according to one of claims 1 to 4, **characterised in that** the suction (37) is applied immediately after the closing of the mould (21, 22).

6. Process according to one of claims 1 to 5, **characterised in that** the suction (37) is applied as a short pulse.

7. Process according to one of claims 1 to 6, **characterised in that** the suction (37) is applied in the form of a plurality of pulses one after the other.

8. Process according to claim 7, **characterised in that** the suction pulses differ in their duration and/or the maximum suction.

9. Process according to claim 1, **characterised in that** the semi-finished product (10) is placed in the hot mould,
**in that** the heating of the semi-finished product (10) to the required operating temperature is then carried out inside the closed mould
and **in that** the mould is then opened, the moulding (30) is removed and cooled outside the mould.

## Revendications

1. Procédé pour produire des pièces moulées (30) en un non-tissé de fibres (10, 20) susceptible d'être consolidé au moyen d'un liant (11) et par pressage,
pour lequel, d'abord, on fabrique le non-tissé de fibres, muni, de préférence, de liants thermoplastiques (11), et l'on procède à une préconsolidation par voie thermique et/ou mécanique pour obtenir un avant-produit (10), pour qu'il puisse ensuite bien se laisser manipuler,
qu'ensuite, l'avant-produit (10) est exposé à un échauffement (16) allant jusqu'à la plastification des liants (11), est inséré dans un outil de moulage sous pression (21, 22) composé d'au moins deux parties d'outil formant, lorsque la presse est fermée, un espace creux constituant le négatif de la pièce moulée souhaitée, et y est comprimé,
que suite à quoi, par refroidissement et/ou durcissement des liants (11) plastiques intermédiaires présents entre les fibres (12) situées dans l'avant produit (10, 20), la pièce moulée (30) consolidée ayant le profil (31) souhaité apparaît,
la pièce moulée (30) présentant alors des zones de profil (32, 33) critiques, ayant une forte courbure (34) de son contour et/ou une hauteur de profil (35) croissant fortement,
**caractérisé en ce que**,
à l'étape de procédé à laquelle l'outil de moulage (21, 22) est fermé, ponctuellement, au moins dans les zones de profil (32, 33) critiques, une succion (37) est exercée sur l'avant produit (10, 20) enclos dans l'outil de moulage (21, 22), faisant que l'air inclus à l'intérieur du non-tissé de fibres est aspiré (37),
et **en ce que**, au moyen de l'écoulement d'air créé lors de l'aspiration (37), le non-tissé de fibres mélangé avec les liants (11) est approché de l'intérieur du moule au contour (26, 25) de l'outil de moulage (22, 21), et reste en cette position fidèle au contour, jusqu'au refroidissement et/ou au durcissement des liants (11) intégrés.

2. Procédé pour produire des pièces moulées (30) en un non-tissé de fibres (10, 20) susceptible d'être consolidé au moyen d'un liant (11) et par pressage,
le non-tissé de fibres étant inséré dans un outil de moulage sous pression (21, 22) composé d'au moins deux parties d'outil, formant, lorsque la presse est fermée, un espace creux constituant le négatif de la pièce moulée souhaitée, et y étant comprimé,
suite à quoi, par refroidissement et/ou durcissement des liants (11) plastiques présents entre les fibres (12) situées dans l'avant produit (10, 20), la pièce moulée (30) consolidée ayant le profil (31) souhaité apparaissant,
la pièce moulée (30) présentant alors des zones de profil (32, 33) critiques, ayant une forte courbure (34) de son contour et/ou une hauteur de profil (35) croissant fortement,
**caractérisé en ce que**
le non-tissé de fibres, encore mélangé à des liants (11) non traités, est introduit entre des plaques chauffantes (14, 15) ou dans l'outil de moulage susceptible d'être chauffé et y est directement exposé à son échauffement, jusqu'à la température de fonctionnement nécessaire, de manière à plastifier les liants,
**en ce que**, à l'étape de procédé à laquelle l'outil de moulage (21, 22) est fermé, ponctuellement, au moins dans les zones de profil (32, 33) critiques, une succion (37) est exercée sur le non-tissé de fibres introduit dans l'outil de moulage (21, 22), faisant que l'air inclus à l'intérieur du non-tissé de fibres est aspiré (37),
et **en ce que**, au moyen de l'écoulement d'air créé lors de l'aspiration (37), le non-tissé de fibres mélangé avec les liants (11) est approché, de l'intérieur du moule au contour (26, 25) de l'outil de moulage (22, 21), et reste en cette position fidèle au contour, jusqu'au refroidissement et/ou au durcissement des liants (11) intégrés.

3. Procédé selon la revendication 1, **caractérisé en ce que**, d'abord, l'échauffement (16) de l'avant produit (10) à la température de fonctionnement nécessaire s'effectue à l'extérieur de l'outil de moulage (21, 22),
et **en ce que**, ensuite, l'avant-produit se trouvant à l'état intermédiaire (20) chaud est inséré dans l'outil de moulage (21, 22) en soi froid et l'outil de moulage (21, 22) est fermé.

4. Procédé selon la revendication 1 ou 3, **caractérisé en ce que** l'échauffement (16) de l'avant produit (10) à la température de fonctionnement (20) nécessaire est effectué entre deux plaques chauffantes (14, 15).

5. Procédé selon l'une des revendications 1 à 4, **caractérisé en ce que** la succion (37) est effectuée juste après la fermeture de l'outil de moulage (21, 22).

6. Procédé selon l'une des revendications 1 à 5, **caractérisé en ce que** la succion (37) est exercée sous forme de courte impulsion.

7. Procédé selon l'une des revendications 1 à 6, **caractérisé en ce que** la succion (37) est effectuée sous la forme de plusieurs impulsions successives.

8. Procédé selon la revendication 7, **caractérisé en ce que** les impulsions de succion se distinguent du point de vue de leur durée et/ou du maximum de succion.

9. Procédé selon la revendication 1, **caractérisé en ce que** l'avant-produit (10) est introduit dans l'outil de moulage chaud,
**en ce que** l'échauffement de l'avant-produit (10) à la température de fonctionnement nécessaire est effectué à l'intérieur de l'outil de moulage fermé,
et **en ce que**, ensuite, le moule est ouvert, la pièce moulée (30) est prélevée et refroidie à l'extérieur de l'outil de moulage.
